# EUROPÄISCHE PATENTSCHRIFT

(11) **EP 1 617 969 B1**
(45) Veröffentlichungstag und Bekanntmachung des Hinweises auf die Patenterteilung: **23.08.2006**
(21) Anmeldenummer: 04729884.9
(22) Anmeldetag: 28.04.2004
(51) Int. Cl.: B23K 37/00, B23Q 16/00

(54) **SCHWEISSBRENNERHALTER**
WELDING TORCH HOLDER
SUPPORT POUR CHALUMEAU SOUDEUR

(30) Priorität: 28.04.2003 DE 10319251
(43) Veröffentlichungstag der Anmeldung: 25.01.2006
(73) Patentinhaber: Alexander Binzel Schweisstechnik GmbH & Co. KG, 35418 Buseck (DE)
(72) Erfinder: SCHÄFER, Ralf, 35435 Wettenberg (DE); GUTZMANN, Jörg, 35274 Kirchhain (DE)
(74) Vertreter: Müller, Eckhard
(86) Internationale Anmeldenummer: PCT/EP2004/004459
(87) Internationale Veröffentlichungsnummer: WO 2004/096485

(56) Entgegenhaltungen:
- GB-A- 683 658
- JP-A- 53 068 648
- US-A- 4 068 833
- US-A- 4 205 828
- US-A- 4 273 504
- US-A- 4 328 412
- US-A- 4 453 883

## Beschreibung

Die Erfindung betrifft einen Schweißbrennerhalter zur Halterung eines Schweißbrenners an einer Schweißvorrichtung oder einem Handlinggerät, wie Industrieroboter, mit einem ersten Halteteil zur Halterung des Schweißbrenners und einem zweiten Halteteil zur Halterung des Schweißbrennerhalters an der Schweißvorrichtung oder dem Handlinggerät, wobei erstes Halteteil und zweites Halteteil lösbar miteinander verbunden sind.

Derartige Werkzeughalter zur Kupplung eines Werkzeuges, insbesondere eines Schweißbrenners oder Schneidbrenners an einem Handlinggerät, bspw. einem Industrieroboter, sind bereits aus der DE 101 32 117 C1 bekannt. Der Werkzeughalter weist eine erste Halterung zur Befestigung des Werkzeuges am Werkzeughalter und eine zweite Halterung zur Befestigung des Werkzeughalters am Handlinggerät oder der Schweißvorrichtung auf. Die ersten und zweiten Halterungen sind relativ zueinander gegen eine Federvorspannung von Federelementen auslenkbar oder verstellbar. Der Werkzeughalter dient als Kollisionsschutz für Werkzeug und Handlinggerät.

Die US-A-4 205 828 bzw. die parallele DE-OS 29 26 791 betrifft ein Brenneraggregat an einer sogenannten Führungsmaschine. Diese Führungsmaschine ist auf Führungsschienen verfahrbar, wobei an einer Querlaufbahn ein Brennerwagen 6 mit dem Brenneraggregat angeordnet ist. Unterhalb der portalförmigen Führungsmaschine befindet sich auf einem Tisch das zu bearbeitende Werkstück, insbesondere einer Metallplatte.

Zur Verschwenkung bzw. Winkeleinstellung des Brenneraggregates ist die Brennerhalterung an einer kreisbogenförmig gekrümmten Führungsschiene geführt. Hierzu weist die Brennerhalterung Führungselemente auf, welche die Führungsschienen umschließen. Die Verschwenkung des Brenners erfolgt mittels eines hydraulischen Zylinderaggregates, welches über eine Hebelmechanik an einem mit dem Brennerhalter verbundenen Drehbolzen angreift.

Zum Justieren der Winkeleinstellung auf der gekrümmten Führungsschiene sind mit dem Brennerhalter verbundene Anschläge vorgesehen, in dessen Bewegungsbahn Stellschrauben ragen.

Zusätzlich sind bei dieser bekannten Schwenkeinrichtung Stabilisierungsplatten vorgesehen, welche mit der Brennerhalterung verbunden und in ortsfest an dem Brennerwagen angeordneten Führungsrollen geführt sind.

Ein weiterer Werkzeughalter, insbesondere für Roboterschweiß- oder Schneidbrenner ist aus der EP 0 668 813 B1 bekannt. Der Werkzeughalter weist ein Gehäuse mit einem darin geführten, federbelasteten Kolbenteil auf, welches ein in dem Gehäuse aufgenommenes und mit einem Werkzeugverbindungsteil verbundenes plattenförmiges Anschlagteil in einer

Grundstellung an einem zugewandten Gehäuseteil hält und bei einer Druckbelastung oder Auslenkung des Werkzeugverbindungsteils bzw. seines Anschlagteils unter Auslösen eines Signals einer Detektoreinrichtung axial verschiebbar ist. Dabei stützt sich das Anschlagteil in einer Grundstellung in Art einer Dreipunkt-Auflage über lediglich drei Positionierelemente an dem zugewandten Gehäuseteil ab, während die weiteren Positionierelemente von Anschlagteil und Gehäuseteil jeweils erst bei einer entsprechenden Kippbewegung des Werkzeugverbindungsteils bzw. des Anschlagteils in Anlagestellung treten.

Daneben sich auch Halter bekannt, welche den Schweiß- oder Schneidbrenner mit der Schweißvorrichtung bzw. dem Handlinggerät starr verbinden. Beim Einrichten des Schweiß-/Schneibrenners wird der Werkzeughalter in der gewünschten Winkelposition verstiftet bzw. verschraubt. Dieses Verstiften bzw. Verschrauben in der Schweißzelle bzw. Schweißvorrichtung führt zu Problemen mit der Genauigkeit der Ausrichtung des Werkzeughalters, so dass der Schweiß-/Schneidbrenner nicht mit ausreichender Genauigkeit an der Schweißvorrichtung bzw. dem Handlinggerät positioniert werden kann.

Auch bei symmetrisch aufgebauten Schweißanlagen, bei denen die linke Bauteilhälfte und die rechte Bauteilhälfte i. w. identisch sind und häufig die komplette Schweißausrüstung inkl. Halterung getauscht wird, ist die Reproduzierbarkeit der Schweißposition äußerst wichtig und kann mit herkömmlichen verstifteten oder verschraubten Werkzeughaltern nicht mit der erforderlichen Genauigkeit bzw. Reproduzierbarkeit gewährleistet werden.

Im Rahmen der vorliegenden Anmeldung wird der Begriff Schweißbrenner synonym für jegliche Arten von Werkzeugen, wie Schweißbrenner, Schneiderbrenner o. dgl. benutzt, mit denen die Bearbeitung eines Werkstückes durchführbar ist.

Demgegenüber liegt der vorliegenden Erfindung die Aufgabe zugrunde, einen Schweißbrennerhalter der eingangs genannten Art dahingehend weiterzubilden, dass eine exakte und reproduzierbare Positionierung des Schweißbrenners bzgl. der Schweißvorrichtung bzw. dem Handlinggerät ermöglicht ist, wobei auch eine einfache Austauschbarkeit der Schweißausrüstung gewährleistet sein soll.

Diese Aufgabe wird bei dem Schweißbrennerhalter mit den Merkmalen des Anspruchs 1 gelöst.

Hierdurch ist für eine leichte Austauschbarkeit der Schweißausrüstung gesorgt. Auch entfällt jeglicher Aufwand für etwaige Korrekturen am Roboter bzw. dem Handlinggerät. Eventuelle Schweißfehler durch nicht korrekte Schweißpositionen des Schweißbrenners werden minimiert.

Unter Indexmitteln sollen im Rahmend der vorliegenden Anmeldung solche Mittel verstanden werden, die es erlauben, das erste Halteteil und das zweite Halteteil durch ineinandergreifende und korrespondierende Vorsprünge bzw. Ausnehmungen in individuellen, vordefinierten Winkelpositionen relativ zueinander anzuordnen, wobei dann erstes Halteteil und zweites Halteteil mittels bspw. einer Verschraubung oder sonstigen Verbindungen und/oder Verbindungsmittel starr miteinander in der gewählten Winkelposition verbunden werden können.

Nach einer ersten vorteilhaften Ausgestaltung der Erfindung ist es vorgesehen, dass erstes Halteteil und zweites Halteteil um eine gemeinsame Achse relativ zueinander verschwenkbar oder verdrehbar sind. Insoweit ist dafür Sorge getragen, dass die voneinander gelösten ersten und zweiten Halteteile in der gewünschten, durch die Indexmittel definierten Winkelposition relativ zueinander verschwenkbar oder verdrehbar sind, wobei dann nach Einstellung der gewünschten Winkelposition erstes und zweites Halteteil bspw. durch Verbindungs- und/oder sonstige Befestigungsmittel in der gewünschten, reproduzierbaren Winkelposition fixiert werden können.

Nach einer vorteilhaften Ausgestaltung ist es vorgesehen, dass erstes Halteteil und zweites Halteteil zur Achse i. w. zentrische Bohrungen zur Aufnahme einer Schraube oder dergleichen Verbindungsmittel aufweisen.

Weiterhin bietet es sich an, dass erstes Halteteil und zweites Halteteil mittels der Schraube und aufgedrehter Mutter, ggf. unter Zwischenlage von Unterlegscheiben, miteinander, bevorzugt starr, verbindbar sind. Aufgrund dieser Maßnahme ist durch einfaches Lösen der Mutter eine individuelle Einstellung des Werkzeughalters ermöglicht, die dann nach Festdrehen der Mutter auf der Schraube fixiert werden kann.

Von besonderem Vorteil werden die Indexmittel durch Löcher oder Einsenkungen sowie korrespondierende Stifte o. dgl. Erhebungen gebildet. Dabei können die Löcher an dem zweiten Halteteil und die Stifte an dem ersten Halteteil angeordnet sein. Es versteht sich, dass die Anordnung der Indexmittel am ersten und zweiten Halteteil jedoch auch vertauscht sein kann.

Bevorzugt sind die Löcher oder dergleichen auf einem zur Achse konzentrischen Kreisring mit bevorzugt äquidistanter Teilung angeordnet. Die Teilung kann den jeweiligen Erfordernissen angepasst werden. In der Praxis bietet sich bspw. eine 30°-Teilung an, so dass insgesamt 12 Löcher vorgesehen sein können. Es versteht sich, dass auch bspw. eine 20°-Teilung oder auch eine 36°-Teilung oder sonstige Teilungen durch entsprechende Lochzahl vorgesehen sein können.

Als zu den Löchern bzw. Einsenken korrespondierende Indexmittel sind wenigstens eine, bevorzugt jedoch zwei Stifte oder dergleichen Erhebungen vorgesehen, welche in die korrespondierenden Löcher bzw. Einsenkungen eintauchen. Sofern zwei Stifte oder Erhebungen vorgesehen sind, bietet es sich an, dass diese i. w. diametral zueinander oder symmetrisch zur Achse angeordnet sind und in die entsprechenden Löcher oder Einsenkungen eintauchen. Natürlich können auch mehr als zwei Stifte o. dgl. Vorsprünge bzw. Erhebungen vorgesehen sein.

Von besonderem Vorteil ist ein Indexmittel als Indexscheibe ausgebildet, die mit einem Halteteil in wenigstens einer, bevorzugt zwei oder mehreren definierten Winkelpositionen verbindbar ist. Bspw. kann die Indexscheibe die Löcher, Bohrungen oder Einsenkungen tragen und mit einem der Halteteile lösbar, in einer definierten Winkelposition festlegbar verbunden sein.

Dabei bietet es sich an, dass die Teilung der zwei oder mehreren Winkelpositionen, in denen die Indexscheibe an einem Halteteil festlegbar ist, unterschiedlich zur Teilung der Löcher ist. Aufgrund dieser Maßnahme ist es möglich, durch entsprechende Anordnung bzw. Winkelposition der Indexscheibe bzw. des zugehörigen Halteteils auch Winkeleinstellungen zwischen erstem und zweitem Halteteil vorzunehmen, die von der vorgegebenen Teilung der Löcher abweicht.

Insbesondere bietet es sich an, dass die Teilung der Winkelpositionen der Indexscheibe 1/n mit n = 2, 3, 4 ... der Teilung der Löcher oder dergleichen, zum Beispiel eine 15°-Teilung, 10°-Teilung, 7,5°-Teilung, beträgt. Ist bspw. die Teilung der Löcher als 30°-Teilung ausgebildet, kann die Teilung der Winkelpositionen der Indexscheibe als 15°-Teilung vorgesehen sein, so dass nicht nur die Stellungen 0, 30°, 60° etc. sondern auch 15°, 45° und 75° der Winkellage von erstem Halteteil bzgl. zweitem Halteteil vorgenommen werden können.

Bevorzugt ist die Indexscheibe in einer topfförmigen Aufnahme eines Halteteils aufgenommen, wobei bevorzugt durch entsprechende Mittel dafür gesorgt ist, dass die Indexscheibe in der topfförmigen Aufnahme zwar lösbar aber unverdrehbar gehalten ist.

Insbesondere ist es hierfür vorgesehen, dass die Indexscheibe eine oder mehrere radial, entsprechend der Teilung angeordnete Schlitzungen aufweist, in die eine im Boden der topfförmigen Aufnahme eingelassene Passfeder, ein Steg oder dergleichen eintaucht. Insoweit ist dann die Möglichkeit gegeben, die Indexscheibe bspw. in einer 0°-Winkelposition oder auch einer 15°-Winkelposition bzgl. der topfförmigen Aufnahme des Halteteils anzuordnen. Weiterhin können die Stifte o. dgl. des anderen Halteteils dann entsprechend der Teilung der i. w. kreisringförmig angeordneten Löcher der Indexscheibe eintauchen und bspw. die Winkellage von erstem Halteteil bzgl. zweitem Halteteil auf 0°, 30°, 60° bzw. 15°, 45°, 75° etc. eingestellt werden.

Schließlich ist es nach einer bevorzugten Ausgestaltung der Erfindung vorgesehen, dass ein Halteteil eine Winkelskalierung und das andere Halteteil eine Markierung aufweist, so dass die eingestellte relative Winkellage der beiden Halteteile zueinander ablesbar ist.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen.

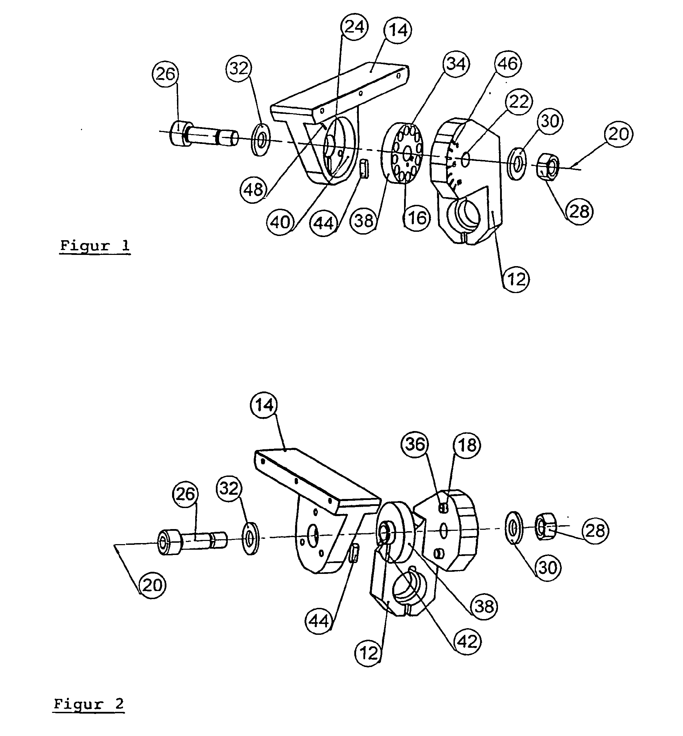

Die Figuren 1 und 2 zeigen ein Ausführungsbeispiel eines erfindungsgemäßen Schweißbrennerhalters, jeweils in Explosionsdarstellung und perspektivischer Ansicht, wobei der Werkzeughalter der Figur 2 um etwa 45° gegenüber der Darstellung der Figur 1 geschwenkt ist.

Der in den Figuren 1 und 2 dargestellte Schweiß-/Schneidbrennerhalter 10 dient zur Halterung eines Schweißbrenners an einer Schweißvorrichtung oder einem Handlinggerät, wie Industrieroboter o. dgl. Der Schweißbrennerhalter 10 weist ein erstes Halteteil 12 zur Halterung des Schweiß-/Schneidbrenners und ein zweites Halteteil 14 zur Halterung des Schweißbrennerhalters einer Schweißvorrichtung oder dem Handlinggerät auf. Erstes Halteteil 12 und zweites Halteteil 14 sind lösbar miteinander verbunden.

Das erste Halteteil 12 und das zweite Halteteil 14 besitzen korrespondierende und zusammenwirkende Indexmittel 16, 18, so dass erstes Halteteil 12 und zweites Halteteil 14 in reproduzierbaren Winkelpositionen relativ zueinander verbindbar und festlegbar sind. Das erste Halteteil 12 und das zweite Halteteil 14 sind um eine gemeinsame Achse 20 relativ zueinander verschwenkbar oder verdrehbar, sofern die Verbindung gelöst ist. Hierzu weisen erstes Halteteil 12 und zweites Halteteil 14 zur Achse 20 i. w. zentrische Bohrungen 22, 24 für die Aufnahme einer Schraube 26 o. dgl. Verbindungsmittel auf. Erstes Halteteil 12 und zweites Halteteil 14 sind mittels der Schraube 26 mit aufgedrehter Mutter 28, ggf. unter Zwischenlage von Unterlegscheiben 30, 32, miteinander verbindbar und in der gewählten Winkelposition feststellbar.

Die Indexmittel 16, 18 sind durch Löcher 34 o. dgl. Einsenkungen sowie korrespondierende Stifte 36 o. dgl. Erhebungen gebildet. Im Ausführungsbeispiel sind die Stifte 36 am ersten Halteteil 12 und die Löcher 34 am zweiten Halteteil 14 vorgesehen. Diese Anordnung kann jedoch auch vertauscht werden. Bevorzugt sind die Löcher 34 o. dgl. auf einem zur Achse 20 konzentrischen Kreisring mit bevorzugt äquidistanter Teilung angeordnet. Die Teilung kann bspw. in 30°-Schritten eines Vollkreises erfolgen. Korrespondierend mit den Löchern 34 am zweiten Halteteil 14 sind am ersten Halteteil 12 wenigstens ein, bevorzugt zwei Stifte 36 vorgesehen, welche gemäß dem Ausführungsbeispiel i. w. diametral zueinander bzw. symmetrisch zur Achse 20 angeordnet sind. Die Stifte 36 tauchen in entsprechende Löcher 34 des zweiten Halteteils 14 ein, wodurch die individuelle, reproduzierbare Winkelposition von erstem Halteteil 12 und zweitem Halteteil 14 relativ zueinander definiert wird.

Von besonderem Vorteil ist ein Indexmittel 16, 18, vorliegend die Löcher 34 als Bestandteil einer Indexscheibe 38 ausgebildet, die mit dem Halteteil 14 in wenigstens einer, bevorzugt jedoch zwei oder mehreren Winkelpositionen verbindbar ist. Die Teilung der zwei oder mehreren Winkelpositionen der Indexscheibe 38 ist unterschiedlich zur Teilung der Löcher 34. Bevorzugt ist es vorgesehen, dass die Teilung der Winkelpositionen der Indexscheibe 38 1/n mit n = 2, 3, 4, ... der Teilung der Löcher 34, zum Beispiel eine 15°-Teilung, 10°-Teilung, 7,5°-Teilung, usw., beträgt.

Dabei ist es vorgesehen, dass die die Löcher 34 aufweisende Indexscheibe in einer topfförmigen Aufnahme 40 des Halteteils 14 aufgenommen ist. Zur Festlegung der Positionierung der Indexscheibe 38 an dem zweiten Halteteil 14 ist es vorgesehen, dass die Indexscheibe 38 eine oder mehrere radiale, entsprechend der Teilung angeordnete Schlitzungen 42 aufweist, in die eine im Boden der topfförmigen Aufnahme 40 eingelassene Passfeder 44 bzw. ein dort vorgesehener Steg eintaucht.

Weiterhin ist es vorgesehen, dass das erste Halteteil 12 eine Winkelskalierung 46 und das andere Halteteil 14 eine Markierung 48 aufweist, so dass die eingestellte relative Winkellage der beiden Halteteile 12, 14 von außen leicht ablesbar ist.

Mit dem beschriebenen Schweiß-/Schneidbrennerhalter besteht die Möglichkeit, den Schweiß-/Schneidbrenner bspw. in 15°-Schritten von 0° bis 90° zu verstellen, ohne dass ein Verstiften bzw. Bohren o. dgl. in der Schweißzelle bzw. der Schweißvorrichtung erforderlich ist. Dies erleichtert zum Beispiel das Einrichten einer Schweißanlage, ein nachträglich erforderliches Verstellen der Schweißausrüstung sowie den kompletten Austausch der Schweißausrüstung einschließlich des Halters. Zum Verstellen des Schweiß-/Schneidbrennerhalters löst man die Mutter 28 von der Schraube 26 und dreht das erste Halteteil 12 mit den Stiften 36 in die gewünschte Winkelposition, bspw. 0°, 30°, 60° oder 90°, wobei dann die Stifte 36 in die entsprechenden Löcher 34 des zweiten Halteteils 14 bzw. der Indexscheibe 38 eintauchen. Danach werden erstes Halteteil 12 und zweites Halteteil 14 mittels der Schraube 26 und Mutter 28 verschraubt, so dass die eingestellte Winkelposition fixiert ist.

Soll eine Verstellung mit einer 15°-Teilung erfolgen, wird die Indexscheibe 38 um bspw. 15° verdreht und anschließend in die topfförmige Aufnahme 40 eingelegt, so dass die Passfeder 44 im Boden der topfförmigen Aufnahme 40 in die entsprechende Schlitzung 42 der Indexscheibe 38 eintaucht. Nun besteht die Möglichkeit, das erste Halteteil 12 bzgl. des zweiten Halteteils 14 in Winkelpositionen von bspw. 15°, 45° und 75° einzurichten. Anschließend werden erstes Halteteil 12 und zweites Halteteil 14 erneut mittels der Schraube 26 und Mutter 28 miteinander verschraubt, so dass die vorher eingestellte Winkelposition fixiert wird.

### Bezugszeichenliste

- 10 -: Schweißbrennerhalter
- 12 -: erstes Halteteil
- 14 -: zweites Halteteil
- 16 -: Indexmittel
- 18 -: Indexmittel
- 20 -: Achse
- 22 -: Bohrung
- 24 -: Bohrung
- 26 -: Schraube
- 28 -: Mutter
- 30 -: Unterlegscheibe
- 32 -: Unterlegscheibe
- 34 -: Loch
- 36 -: Stift
- 38 -: Indexscheibe
- 40 -: Aufnahme
- 42 -: Schlitzung
- 44 -: Passfeder
- 46 -: Winkelskalierung
- 48 -: Markierung

## Patentansprüche

1. Roboterschweißbrennerhalter zur Halterung eines Schweiß-/Schneidbrenners an einem Roboter mit einem ersten Halteteil (12) zur Halterung des Schweiß-/Schneidbrenners und einem zweiten Halteteil (14) zur Halterung des Schweiß-/Schneidbrennerhalters an der Schweiß-/Schneidvorrichtung oder dem Handlinggerät, wobei erstes Halteteil (12) und zweites Halteteil (14) lösbar miteinander verbunden sind und zusammenwirkende Indexmittel (16, 18) aufweisen, **dadurch gekennzeichnet, dass** erstes Halteteil (12) und zweites Halteteil (14) um eine gemeinsame Achse (20) relativ zueinander verschwenkbar oder verdrehbar und die Indexmittel (16, 18) durch ineinander greifende und korrespondierende Vorsprünge und Ausnehmungen gebildet sind, welche auf einem zur Achse (20) konzentrischen Kreisring angeordnet sind, so dass erstes Halteteil (12) und zweites Halteteil (14) in reproduzierbaren Winkelpositionen relativ zueinander verbunden sowie ggf. fixierbar sind.

2. Roboterschweißbrennerhalter nach Anspruch 1, **dadurch gekennzeichnet, dass** die Indexmittel (16, 18) durch Löcher (34) oder dgl. Einsenkungen sowie korrespondierende Stifte (36) o. dgl. Erhebungen gebildet sind.

3. Roboterschweißbrennerhalter nach Anspruch 1 oder 2, **dadurch gekennzeichnet, dass** wenigstens ein, bevorzugt zwei Stifte (36) oder dergleichen, bevorzugt i. w. diametral zueinander und/oder symmetrisch zur Achse (20) angeordnet sind.

4. Roboterschweißbrennerhalter nach einem der Ansprüche 1 bis 3, **dadurch gekennzeichnet, dass** erstes Halteteil (12) und zweites Halteteil (14) zur Achse (20) i. w. zentrische Bohrungen (22, 24) zur Aufnahme einer Schraube (26) oder dergleichen Verbindungsmittel aufweisen.

5. Roboterschweißbrennerhalter nach Anspruch 4, **dadurch gekennzeichnet, dass** erstes Halteteil (12) und zweites Halteteil (14) mittels der Schraube (26) mit aufgedrehter Mutter (28), ggf. unter Zwischenlage von Unterlegscheiben (30, 32), miteinander verbindbar sind.

6. Roboterschweißbrennerhalter nach einem der vorhergehenden Ansprüche, **dadurch gekennzeichnet, dass** ein Indexmittel (16, 18) als Indexscheibe (38) ausgebildet ist, die mit einem der beiden Halteteile (12, 14) in wenigstens einer, bevorzugt zwei oder mehreren Winkelpositionen, verbindbar und ggf. fixierbar ist.

7. Roboterschweißbrennerhalter nach Anspruch 6, **dadurch gekennzeichnet, dass** die Teilung der zwei oder mehreren Winkelpositionen unterschiedlich zur Teilung der Löcher (34) o. dgl. ist.

8. Roboterschweißbrennerhalter nach Anspruch 7, **dadurch gekennzeichnet, dass** die Teilung der Winkelpositionen der Indexscheibe (38) 1/n mit n = 2, 3, 4 ... der Teilung der Löcher (34) oder dergleichen, zum Beispiel eine 15°-Teilung, 10°-Teilung, 7,5°-Teilung usw., beträgt.

9. Roboterschweißbrennerhalter nach einem der vorhergehenden Ansprüche 6 bis 8, **dadurch gekennzeichnet, dass** die Indexscheibe (38) in einer topfförmigen Aufnahme (40) eines Halteteils (12) aufgenommen ist.

10. Roboterschweißbrennerhalter nach einem der vorhergehenden Ansprüche 6 bis 9, **dadurch gekennzeichnet, dass** die Indexscheibe (38) eine oder mehrere radiale, entsprechend der Teilung angeordnete Schlitzungen (42) aufweist, in die eine im Boden der topfförmigen Aufnahme (40) eingelassene Passfeder (44) oder ein Steg eintaucht.

11. Roboterschweißbrennerhalter nach einem der vorhergehenden Ansprüche, **dadurch gekennzeichnet, dass** ein Halteteil (12, 14) eine Winkelskalierung (46) und das andere Halteteil (14, 12) eine Markierung (48) aufweist, so dass die eingestellte relative Winkellage der beiden Halteteile (12, 14) ablesbar ist.

## Claims

1. Robot welding torch holder for holding a welding/cutting torch at a robot with a first holding part (12) for holding the welding/cutting torch and a second holding part (14) for holding the welding/cutting torch holder at the welding/cutting device or the handling apparatus, wherein first holding part (12) and second holding part (14) are detachably connected together and have co-operating indexing means (16, 18), **characterised in that** first holding part (12) and second holding part (14) are pivotable or rotatable relative to one another about a common axis (20) and the indexing means (16, 18) are formed by interengaging and corresponding projections and recesses which are arranged on a circular ring, which is concentric with the axis (20), so that first holding part (12) and second holding part (14) are connected and optionally fixable in reproducible angular positions relative to one another.

2. Robot welding torch holder according to claim 1, **characterised in that** the indexing means (16, 18) are formed by holes (34) or like depressions as well as corresponding pins (36) or like elevations.

3. Robot welding torch holder according to claim 1 or 2, **characterised in that** at least one, preferably two pins (36) or the like are arranged preferably substantially diametrically opposite one another and/or symmetrically with respect to the axis (20).

4. Robot welding torch holder according to one of claims 1 to 3, **characterised in that** first holding means (12) and second holding means (14) have bores (22, 24), which are substantially centric with respect to the axis (20), for reception of a screw (26) or like connecting means.

5. Robot welding torch holder according to claim 4, **characterised in that** first holding means (12) and second holding means (14) are connectible together by means of the screw (26) with tightened nut (28), optionally with interposition of washers (30, 32).

6. Robot welding torch holder according to one of the preceding claims, **characterised in that** an indexing means (16, 18) is constructed as an indexing disc (38) which is connectible and optionally fixable with one of the two holding means (12, 14) in at least one, preferably two or more angular positions.

7. Robot welding torch holder according to claim 6, **characterised in that** the pitch of the two or more angular positions is different from the pitch of the holes (34) or the like.

8. Robot welding torch holder according to claim 7, **characterised in that** the pitch of the angular positions of the indexing disc (38) is 1/n, wherein n = 2, 3, 4 ..., of the pitch of the holes (34) or the like, for example a 15° pitch, 10° pitch, 7.5° pitch, etc.

9. Robot welding torch holder according to one of the preceding claims to 6 to 8, **characterised in that** the indexing disc (38) is received in a pot-shaped receptacle (40) of a holding part (12).

10. Robot welding torch holder according to one of the preceding claims 6 to 9, **characterised in that** the indexing disc (38) has one or more radial slots (42) which are arranged in correspondence with the pitch and into which a fit key (44), which is let into the base of the pot-shaped receptacle (40), or a web enters.

11. Robot welding torch holder according to one of the preceding claims, **characterised in that** one holding part (12, 14) has an angle scale (46) and the other holding part (14, 12) has a marking (48), so that the set relative angular position of the two holding parts (12, 14) can be read off.

## Revendications

1. Porte-chalumeau à souder pour robots pour la retenue d'un chalumeau à souder/couper sur un robot comportant une première pièce de retenue (12) pour la retenue du chalumeau à souder/couper et une deuxième pièce de retenue (14) pour la retenue du porte-chalumeau à souder/couper sur le dispositif de soudage/découpage ou l'appareil de manipulation, une première pièce de retenue (12) et une deuxième pièce de retenue (14) étant reliées ensemble de manière amovible et présentant des moyens d'indexage (16, 18) coopérant l'un avec l'autre, **caractérisé en ce que** la première pièce de retenue (12) et la deuxième pièce de retenue (14) peuvent pivoter ou tourner l'une par rapport à l'autre autour d'un axe commun (20) et les moyens d'indexage (16, 18) sont formés par des saillies et des creux correspondants et venant en prise l'un dans l'autre, qui sont disposés sur une bague circulaire concentrique par rapport à l'axe (20), de sorte que la première pièce de retenue (12) et la deuxième pièce de retenue (14) sont reliées l'une par rapport à l'autre dans des positions angulaires reproductibles et, le cas échéant, peuvent être immobilisées.

2. Porte-chalumeau à souder pour robots selon la revendication 1, **caractérisé en ce que** les moyens d'indexage (16, 18) sont formés par des trous (34) ou autres creux ainsi que par des goupilles (36) correspondantes ou autres saillies.

3. Porte-chalumeau à souder pour robots selon la revendication 1 ou 2, **caractérisé en ce qu'**au moins une, de préférence, deux goupilles (36) ou autres sont disposées de préférence sensiblement diamétralement l'une par rapport à l'autre et/ou symétriques par rapport à l'axe (20).

4. Porte-chalumeau à souder pour robots selon l'une quelconque des revendications 1 à 3, **caractérisé en ce que** la première pièce de retenue (12) et la deuxième pièce de retenue (14) présentent des alésages (22, 24) sensiblement centralisés par rapport à l'axe (20) pour loger une vis (26) ou autres moyens de liaison.

5. Porte-chalumeau à souder pour robots selon la revendication 4, **caractérisé en ce que** la première pièce de retenue (12) et la deuxième pièce de retenue (14) peuvent être reliées ensemble au moyen de la vis (26) avec un écrou vissé dessus (28), le cas échéant en intercalant des rondelles (30, 32).

6. Porte-chalumeau à souder pour robots selon l'une quelconque des revendications précédentes, **caractérisé en ce qu'**un moyen d'indexage (16, 18) est configuré sous forme de disque d'indexage (38) qui peut être relié et, le cas échéant, immobilisé, avec l'une des deux pièces de retenue (12, 14) dans au moins une, de préférence deux positions angulaires ou plus.

7. Porte-chalumeau à souder pour robots selon la revendication 6, **caractérisé en ce que** la division des deux positions angulaires ou plus est différente de la division des trous (34) ou autres.

8. Porte-chalumeau à souder pour robots selon la revendication 7, **caractérisé en ce que** la division des positions angulaires du disque d'indexage (38) est égale à 1/n avec n = 2, 3, 4 ... de la division des trous (34) ou autres, par exemple une division de 15°, une division de 10°, une division de 7,5°, etc.

9. Porte-chalumeau à souder pour robots selon l'une quelconque des revendications précédentes 6 à 8, **caractérisé en ce que** le disque d'indexage (38) est logé dans un logement en forme de pot (40) d'une pièce de retenue (12).

10. Porte-chalumeau à souder pour robots selon l'une quelconque des revendications précédentes 6 à 9, **caractérisé en ce que** le disque d'indexage (38) présente une ou plusieurs fentes (42) radiales disposées en fonction de la division, dans lesquelles plonge un ressort d'ajustage (44) enchâssé dans le fond du logement en forme de pot (40) ou une entretoise.

11. Porte-chalumeau à souder pour robots selon l'une quelconque des revendications précédentes, **caractérisé en ce qu'**une pièce de retenue (12, 14) présente une échelle d'angle (46) et l'autre pièce de retenue (14, 12) une marque (48) de sorte que la position angulaire relative fixée des deux pièces de retenue (12, 14) peut être relevée.
